(19) Europäisches Patentamt / European Patent Office / Office européen des brevets

(11) **EP 4 178 999 B1**

(12) **EUROPEAN PATENT SPECIFICATION**

(45) Date of publication and mention of the grant of the patent:
**04.03.2026 Bulletin 2026/10**

(21) Application number: **21740028.2**

(22) Date of filing: **06.07.2021**

(51) International Patent Classification (IPC):
***C08G 18/62*** *(2006.01)* ***C08G 18/79*** *(2006.01)*
***C08L 53/02*** *(2006.01)* ***C09D 151/06*** *(2006.01)*
***C09D 153/02*** *(2006.01)* ***C09D 175/04*** *(2006.01)*
***B32B 27/24*** *(2006.01)* ***B32B 27/30*** *(2006.01)*
***B32B 27/40*** *(2006.01)* ***B32B 5/02*** *(2006.01)*
***C08G 18/40*** *(2006.01)* ***C08L 75/04*** *(2006.01)*

(52) Cooperative Patent Classification (CPC):
(C-Sets available)
**C09D 151/06; B32B 5/024; C08G 18/4063; C08G 18/6204; C08G 18/794; C08G 18/798; C08L 53/025; C08L 75/04; C09D 153/025; C09D 175/04;** B32B 2262/0276; B32B 2419/06
(Cont.)

(86) International application number:
**PCT/EP2021/068596**

(87) International publication number:
**WO 2022/008483 (13.01.2022 Gazette 2022/02)**

(54) **TPO PRIMER**
TPO-PRIMER
APPRÊT TPO

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.07.2020 EP 20184869**

(43) Date of publication of application:
**17.05.2023 Bulletin 2023/20**

(73) Proprietor: **Habasit AG**
**4153 Reinach (CH)**

(72) Inventors:
- **RAINERI, DR., Isabelle**
  **4153 Reinach (CH)**
- **BRODMANN, Kurt**
  **4153 Reinach (CH)**

(74) Representative: **Bohest AG**
**Holbeinstrasse 36-38**
**4051 Basel (CH)**

(56) References cited:
**WO-A1-2017/003600**
**US-A1- 2015 315 400**
**US-B1- 6 303 685**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 53/025, C08L 51/06;**
**C09D 175/04, C08K 3/013**

## Description

The present invention concerns adhering pairs of different plastics which are TPO/polyester, TPO/TPU and TPO/PU, together.

### Background

TPO has been used in several industrial fields. It has e.g. been employed in the form of recover films or membranes as a cover layer in building roofs in order to impart resistance to water. TPO is also increasingly being used in the automotive industry where many parts, such as bumpers, are now made from TPO in order to reduce weight. TPO itself has the known disadvantage that it does not adhere well to substrates made of other materials due to its low surface energy.

A customary way of adhering a TPO sheet to a substrate of an other material would have been a simple mechanical joining such as by rivets, screws or nails. This joining method does not form an intimate contact between TPO layer and substrate over the entire contact surface.

In the field of conveyor belts there have been known conveyor belts having a TPO cover layer which is adhered to a fabric traction layer. An example therefor are the Cleanline® series conveyor belts marketed at the time of filing of this application by its applicant. The fabric traction layer is awoven textile, comprising monofilament wefts and spunbond fibre warps. The rough and fluffy surfaces and the fibre ends of the spunbond warp fibres enable an intimate physical entangling of the TPO layer with the fabric which compensates for the insufficient adhesion between TPO and textile. A spunbond fabric however has a rather low tenacity. Accordingly such conveyor belts have rather low tensile force for 1% elongation in the relaxed state (k1% relaxed) of typically only 3-5 N/mm, which means the weight of the load they can carry is limited. This limitation becomes more problematic with increasing length of the conveyor belt because the belt's downward bending under the weight of the carried load will become more pronounced. Accordingly such belts are primarily suited for lightweight food applications. For applications with heavier loads and/or higher lengths and thus requiring belts having k1 % relaxed values in the range of typically 8-12 N/mm the use of a spunbond fabric as the traction layer becomes unfeasible.

In the said field of building roofs it has also been known that damaged or aged TPO-based roofs can be overcoated for repairing purposes with aqueous or solvent-based acrylic latex coating solutions which adhere to the TPO and crosslink to an elastomer. Based on the corresponding advertisements on the internet (such as by Arkema Coating Resins) it appears that the adhesion of such acrylic latexes is markedly better on aged TPO than on new TPO, indicating that the TPO must have undergone surface modification by atmospheric oxidation and/or UV degradation before such acrylic latexes can be successfully applied.

In the said field of automotive industry it has also been known to overpaint TPO-made parts. The paint was applied to the TPO part over the intermediary of an adhesion promoter which as the main active component comprised a chlorinated polypropylene (see e.g. Mirabella et al., Polymer Engineering and Science, Vol. 40(9), pp. 2000-2006 (2004)).

There are on the market maleic anhydride-modified ("maleated") polyolefins, examples therefore being the Amplify™ and Fusabond® (Dow) and Orevac® (Arkema) types. Similarly there are on the market maleic anhydride-modified ("maleated") styrenic block copolymers, examples therefore being the Kraton™ (Kraton or Shell) SEBS-based types.

It has been known (see e.g. US 4,156,065 A) that isocyanates and anhydrides or carboxylic acids can be reacted together, particularly in presence of suited catalysts, to form polyamides or polyamide-imides, respectively. The products so obtained are said to be suitable, among others, as coating compositions. They may be used as impregnating resins or applied to various substrates such as woven fabrics or other polymeric materials.

WO 2017/003600 A1 discloses compositions comprising a functionalized styrenic block copolymer, a functionalized ethylene/$\alpha$-olefin interpolymer and an isocyanate component, and comprising a hydrocarbon solvent and a polar solvent which may be a ketone. The compositions may be used as primer in an article containing a layer of, among others, PET, and optionally a polyolefin layer.

There is thus still the need for an adhesion promoter that allows to generally adhere TPO parts or TPO layers to parts or coatings made of other plastics, such as TPU, polyester (in particular PET) or PU.

### Summary of the invention

The invention provides an use of a composition comprising an anhydride-modified polyolefin, an anhydride-modified styrenic block copolymer, and an isocyanate-containing crosslinker, wherein the composition is as defined in claim 1. The invention also provides a composition as defined in claim 11.

Detailed description of the invention

The invention firstly uses an anhydride-modified polyolefin. By "anhydride-modified polyolefin" is understood on the one hand that a polyolefin yet devoid of anhydride moieties is grafted with anhydride-containing sidechains or anhydride-containing moieties. Here the polyolefin to be modified is preferably a polyethylene, an ethylene-$\alpha$-olefin-copolymer wherein the $\alpha$-olefin is selected from the group consisting of propene, 1-butene, 1-pentene, 1-hexene, 1-heptene and 1-octene, or a polypropylene. More preferred is a polyethylene or a polypropylene. The grafting reaction may preferably be by a free-radical mechanism. This is done typically in the molten state of the starting polyolefin, preferably at a temperature in the range from the melting point of the starting polyolefin up to 260°C (if the starting polymer has a sharp melting point), or at a temperature in the range from the upper temperature boundary value of the melting range) of the starting polyolefin up to 260°C (if the starting polyolefin has a melting range). The grafting may be done by mixing the molten starting polyolefin with a free-radical initiator and an olefinic anhydride in a Banbury mixer or extruder, for a time ranging typically from 20 seconds to 2 minutes. The initiator is typically a thermal initiator, such as a diacyl peroxide, $\alpha$-oxy- and $\alpha$-peroxyhydroperoxide or hydroperoxide, preferably it is dibenzoyl peroxide. The olefinic anhydride is preferably selected from the group consisting of maleic anhydride; the Diels-Alder reaction products of maleic anhydride with buta-1,3-diene, cyclopentadiene or cyclohexa-1,3-diene; and the reaction products of maleic anhydride with one of the above exemplified $\alpha$-olefins (the latter reaction products are termed in the art as "alkenyl succinic anhydrides"). The amount of initiator is preferably in the range of 0.1 to 0.5% by weight, based on the starting polyolefin. The amount of olefinic anhydride is typically in the range of 0.1 to 10% by weight, preferably 0.2 to 5% by weight, based on the starting polyolefin. This free-radical grafting, particularly when done with maleic anhydride itself, may also be done in the presence of an $\alpha$-olefin (as exemplified above) and styrene as co-monomers, as described in WO 94/15981 A1.

By "anhydride-modified polyolefin" is alternatively understood in the context of the invention that an olefinic anhydride, as exemplified above, is directly copolymerized as a co-monomer with ethylene and/or above exemplified $\alpha$-olefins by free-radical mechanism as is customary in the art.

In either of the two above meanings for "anhydride-modified polyolefin" the amount of anhydride moieties (-C(O)-O-(O)-C-) is preferably in the range of 0.1 to 5% by weight, preferably of 0.5 to 2% by weight, based on the anhydride-modified polyolefin, as determinable by quantitative titration with potassium methoxide solution in methanol.

Suitable for the purposes of the invention are also commercially available maleated polyolefins such as those mentioned in the introduction.

The anhydride-modified polyolefin is for the purposes of the invention preferably thermoplastic, that is, not chemically crosslinked or only chemically crosslinked to such a weak extent that it remains soluble at useful concentrations in the solvents that are considered for preparing the composition of the invention . Accordingly the melt flow rate (MFR) of the anhydride-modified polyolefin is preferably in the range of 0.5 to 40 g/10 min, more preferably of 1 to 20 g/10 min, at a load of 2.16 kg, provided that the MFR is measured at a melt temperature of 190°C for anhydride-modified polyolefins that have a melting point below 150°C or have a melting range lying entirely below 150°C; and is measured at a melt temperature of 230°C for anhydride-modified polyolefins that have a melting point of at least 150°C or have a melting range wherein the lower temperature boundary value is at least 150°C.

The invention secondly uses an anhydride-modified styrenic block copolymer. The styrenic block copolymer itself is as customarily understood and is obtainable by ionic copolymerisation of styrene with an 1,3-diolefin and optionally also with ethylene. The styrenic block copolymer is preferably selected from the group consisting of SBS (styrene-butadiene-styrene), SIS (styrene-isoprene-styrene) and SEBS (styrene-(ethylene-co-butylene)-styrene), and most preferably is SEBS.

By "anhydride-modified styrenic block copolymer" is understood that a styrenic block copolymer yet devoid of anhydride moieties is grafted with anhydride-containing sidechains or anhydride-containing moieties. Here the starting styrenic block copolymer to be modified preferably contains 20 to 70% by weight, more preferably 25 to 50% by weight, of polystyrene block sequences, based on the overall weight of the starting styrenic block copolymer. The grafting reaction may be done analogously as described above for the anhydride-modified polyolefin.

Preferred embodiments concerning the content of anhydride moieties in the anhydride-modified styrenic block copolymer and their determination methods are as described above for the anhydride-modified polyolefin.

For the purposes of the invention the anhydride-modified styrenic block copolymer is thermoplastic or thermoplastic elastomeric, that is, not crosslinked or only crosslinked to such a weak extent that it remains soluble in the solvent of the composition of the invention at useful concentrations. Accordingly the melt flow rate (MFR) of the anhydride-modified styrenic block copolymer is preferably in the range of 5 to 50 g/10 min, more preferably of 10 to 40 g/10 min at a load of 5 kg and at a melt temperature of 230°C.

Suitable for the invention are also commercially available maleated styrenic block copolymers, such as those mentioned in the introduction.

The weight ratio of anhydride-modified polyolefin to anhydride-modified styrenic block copolymer is in both the composition and the combination of the invention preferably in the range of 2:1 to 6:1, more preferably of 3:1 to 5:1 and

most preferably 3.5:1 to 4.5:1.

The invention thirdly uses an isocyanate-containing crosslinker. The term "crosslinker" has the usual meaning which is a compound capable to produce a covalent link between two polymer chains and which therefore needs at least two functional groups which are capable to react with the two polymer chains. For the purposes of the invention a crosslinker thus is a compound having at least two NCO functions, preferably three or more NCO functions. Particularly suitable are aliphatic and/or aromatic polyisocyanates. Polyisocyanates of the mentioned type are, inter alia, biuretised, optionally uretidinedione-containing polyisocyanates of aliphatic or cycloaliphatic diisocyanates such as hexane diisocyanate and/or isophorone diisocyanate, cyanurates of hexane diisocyanate, isophorone diisocyanate, 2,4-/2,6-toluylene diisocyanate, or optionally mixtures of such polyisocyanates or mixed-polymerised polyisocyanates. Also suitable are reaction products of trimethylolpropane, glycerol, pentaerythritol or other polyols in admixture with dialcohols such as diethylene glycol, 1,4-butanediol, dipropylene glycol and other diols with a molar excess of toluoylene diisocyanates, diphenylmethane diisocyanates or isomeric mixtures thereof, also reaction products of dialcohols such as di- and triethylene glycol, di- and tri-propylene glycol with molar excess amounts of toluylene diisocyanates or diphenylmethane diisocyanates, on their own or in a mixture.

Preferably the isocyanate-containing crosslinker is one of the following:

i) A reaction product obtainable by first reacting aniline with formaldehyde in presence of hydrochloric acid catalyst, and then reacting the obtained mixture of homologous aniline-formaldehyde adducts with phosgene to convert the aromatic amine groups to isocyanate groups. This reaction product is as such conventional and is believed to be essentially a mixture of compounds each conforming to the structure

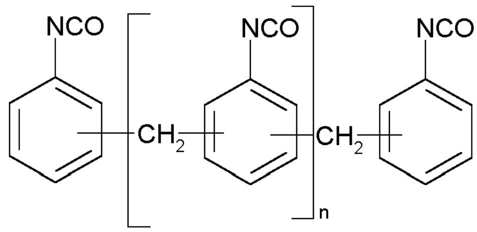

wherein n is an integer number preferably in the range of 0 to 20, more preferably in the range of 1 to 10, and the methylene bridges may be ortho, meta or para to the NCO groups.

ii) 2,4-tolylenediisocyanate, 2,6-tolylenediisocyanate, hexamethylenediisocyanate, m-xylenediisocyanate, p-xylenediisocyanate, hexametylene diisocyanate, dicyclohexylmethane-4,4'-diisocyanate, meta-tetramethylxylylene diisocyanate, trans-cyclohexane diisocyanate, isophorone diisocyanate or diphenylether-2,4,4-triisocyanate;

iii) an uretidinedione- and/or 2,4,6-trioxotriazine-containing oligomer of 2,4-tolylenediisocyanate and/or 2,6-tolylenediisocyanate. This oligomer may have the structure (I):

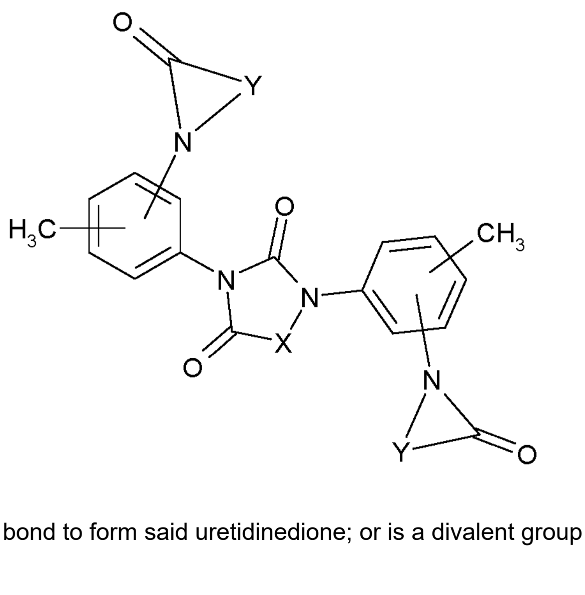

(I)

wherein X is either a direct bond to form said uretidinedione; or is a divalent group of the structure (II)

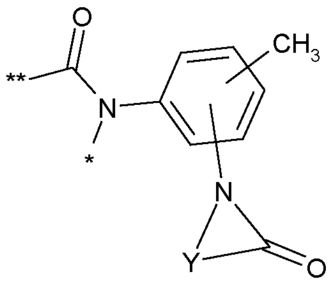

(II)

to form said 2,4,6-trioxotriazine, wherein in structures (I) and (II):

- on each phenyl ring its two NCO-containing substituents are in meta position to each other; and its methyl substituent is either in ortho position to both its NCO-containing substituents, or is in ortho position to one of its NCO-containing substituents and in para position to the other of its NCO-containing substituents; and
- Y is a direct bond, or a further divalent group of above structure (II) to form another uretidinedione, or a divalent group of the structure (III):

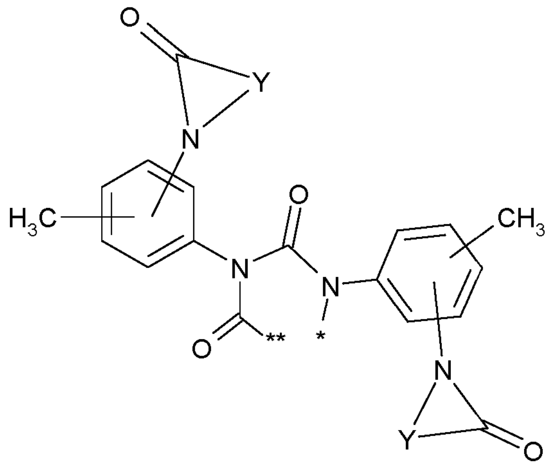

(III)

to form another 2,4,6-trioxotriazine, wherein all symbols are as defined for structures (I) and (II);

provided that the oligomer of structure (I) remains soluble in the solvent of the composition in the concentrations needed for the invention. The latter means that the oligomer of structure (I) has a molecular weight which is preferably below m × 174.2 g/mol; wherein m is 7, preferably 5.

Most preferably in above structure (I) X and all Y are a direct bond, that is, the compound of structure (I) is a dimer of 2,4-tolylenediisocyanate and/or of 2,6-tolylenediisocyanate; or X is a divalent group of the above structure (II), and all Y are a direct bond, that is, the compound of structure (I) is a trimer of 2,4-tolylenediisocyanate and/or of 2,6-tolylenediisocyanate.

These oligomers are customarily obtainable e.g. by reacting 2,4-tolylenediisocyanate and/or 2,6-tolylenediisocyanate in a suited solvent such as toluene and/or ortho-dichlorobenzene in presence of a catalytical amount of pyridine at room temperature, optionally followed by warming to a temperature in the range of 40°C to 100°C, to control the molecular weight of the oligomer. Such oligomers wherein m is 3, 5 or 7 are known and have received EC registration number 938-708-5.

The NCO content of the isolated isocyanate-containing crosslinker as a starting material in the composition of the invention is preferably from 5 to 40%, whereas in the use of the invention that content is from 10 to 35% by weight, in each case based on the isocyanate-containing crosslinker. This determination may be done for the purposes of the invention according to standard DIN 11909 (2007) at room temperature.

The content of anhydride moieties (-C(O)-O-C(O)-) in the isolated anhydride-modified polyolefin or the isolated anhydride-modified styrenic block copolymer as the starting materials, may be done for the purposes of the invention following the procedure of Ghaemy, M., Roohina, S,, Iranian Polymer Journal 12(1), pp. 21ff. (2003). An aliquot of 1.00 g of the anhydride-modified polyolefin or anhydride-modified styrenic block copolymer is heated as a solution in watersaturated xylene to reflux. To the still hot solution is added three to four drops of 1% Thymol Blue in DMF as indicator and a

known excess of 0.05N ethanolic KOH, such as to obtain the blue endpoint of the indicator. The remaining excess of KOH is titrated back using 0.05N isopropanolic HCl to the yellow endpoint of the indicator. The weight percent of anhydride moieties, based on the weight of the analysed aliquot, is obtained as

$$wt\%_{anhydride} = 100 \times \frac{(V_{KOH} - V_{HCl}) \times N \times MW_{anhydride}}{2000 \times m_{aliquot}} \quad (1)$$

wherein

$V_{KOH}$ is the excess volume of ethanolic KOH (in ml) needed to reach Thymol Blue blue endpoint;
$V_{HCl}$ is the volume of isopropanolic HCl (in ml) needed to back-titrate to Thymol Blue yellow endpoint;
N is the normality of the ethanolic KOH and the isopropanolic HCl (thus 0.05N in both cases);
$MW_{anhydride}$ is the molecular weight of an anhydride moiety (-C(O)-O-C(O)-), thus 72.02 g/mol; and
$m_{aliquot}$ is the mass of the anhydride-containing aliquot, thus 1.00g.

The determination of the content of anhydride moieties in the dry mass of the overall composition of the invention requires beforehand conversion of the also contained isocyanate groups into other moieties which do not interfere with the anhydride determination. This is conveniently done by first reacting the dry mass of the composition with benzoic acid, in an excess of 2 to 10 moles for each mole of presumed content of isocyanate in dry xylene solution at reflux. This irreversibly converts the isocyanates to benzamides with loss of one $CO_2$ molecule per isocyanate group. The anhydrides present in the dry matter do not react or transmutate to mixed anhydrides containing benzoyl moieties, which does not change the overall amount of anhydride moietes (-C(O)-O-(O)C-). After the reaction the mixture may be evaporated to dryness to re-obtain a dry mass.

The determination of anhydride moietes (-C(O)-O-(O)C-) in that dry mass must then be done in the presence of free carboxylic acids (benzoic acid or other free carboxylic acid released by said anhydride transmutation with benzoic acid). This may be done using a procedure similar as described by Siggia, S., and Gordon Hanna, J, Anal. Chem. 23(11), p. 1717ff. (1951). An aliquot of 1.00 g of the anhydride-containing dry mass is heated together with an exactly known amount of aniline, which may be 2 to 20 moles in excess per presumed mole of anhydride moieties in the aliquot, as a solution in dry xylene to reflux. The aniline reacts with the anhydride moieties but not noticeably with the free carboxylic acid moieties. The solution is cooled down to room temperature and the remaining excess of free aniline is titrated back using 0.05N isopropanolic HCl with Thymol Blue in DMF as indicator to the red endpoint thereof. An identical amount of aniline as used above is directly titrated with HCl under the same conditions as above. The weight percent of anhydride moieties, based on the weight of the analysed aliquot, is obtained as

$$wt\%_{anhydride} = 100 \times \frac{(V_r - V_s) \times N_{HCl} \times MW_{anhydride}}{1000 \times m_{aliquot}} \quad (2)$$

wherein

$V_s$ is the volume of isopropanolic HCl (in ml) needed to reach Thymol Blue red endpoint for the aniline amount that did undergo reaction with the anhydride-containing aliquot;
$V_r$ is the volume of isopropanolic HCl (in ml) needed to reach Thymol Blue red endpoint for the identical aniline which is tritrates as such with HCl;
$N_{HCl}$ is the normality of the isopropanolic HCl (thus 0.05N);
$MW_{anhydride}$ is the molecular weight of an anhydride moiety (-C(O)-O-C(O)-), thus 72.02 g/mol; and
$m_{aliquot}$ is the mass of the anhydride-containing aliquot that was reacted with excess aniline, thus 1.00g.

The content of anhydride moieties in weight percent anhydride moieties per grams of overall composition (thus including the optional solvent and any optional further components) is obtainable by accurately weighing an aliquot of the overall composition, evaporating the aliquot to dryness at elevated temperature and/or under vacuum and weighing back the dried aliquot, to obtain a dry mass content of the composition, performing the above conversion of isocyanate to amide using benzoic caid, analysing for anhydride content on the dry mass, and correcting the weight% content of anhydride moieties of the dry mass so obtained by the dry matter content of the overall composition.

The anhydride (as -C(O)-O-C(O) moieties) content of the overall composition (including the solvent), as determined by above formula (1), is preferably in the range of $5\times10^{-4}$ mol to $5\times10^{-3}$ mol, more preferably of $6\times10^{-4}$ mol to $3\times10^{-3}$ mol, anhydride per gram of overall composition. The anhydride (-C(O)-O-C(O)-) content based on the dry

mass of the composition (without solvent), as determined by above formula (2), is preferably in the range of $5\times10^{-3}$ mol to $5\times10^{-2}$ mol, more preferably of $5\times10^{-3}$ mol to $2\times10^{-2}$ mol, anhydride per gram of composition dry mass.

The weight ratio of isocyanate-containing crosslinker to the sum of anhydride-modified polyolefin plus anhydride-modified styrenic block copolymer is in both the composition and the combination of the invention preferably in the range of 0.2:1 to 0.8:1.

The composition of the invention is in the form of a solution or dispersion, more preferably in the form of a solution, in a solvent.

This solvent in turn comprises as a first component a ketone solvent which is one or more aliphatic $C_5$-$C_8$-ketones each adhering to the following formula:

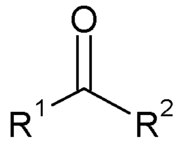

wherein $R^1$ and $R^2$ are each independently selected from the group consisting of methyl, ethyl and branched or unbranched $C_3$-$C_4$ alkyl, provided that the total carbon number of $R^1$ and $R^2$ is in the range of 4 to 7; or wherein $R^1$ and $R^2$ taken together form an alkylene bridge $-(CH_2)_m-$, wherein m is an integer in the range of 4 to 7. More preferably in this formula, $R^1$ and $R^2$ taken together form an alkylene bridge $-(CH_2)_m-$, wherein m is an integer in the range of 5 to 6. Most preferably the ketone solvent is essentially (meaning at least 95% by volume, based on the ketone solvent) cyclohexanone.

In the use of the invention the solvent comprises in addition to the ketone solvent a $C_6$-$C_8$-alkane solvent as a second component. The $C_6$-$C_8$-alkane solvent is preferably one or more methyl-substituted cycloalkanes, each more preferably having a boiling point in the range of 80°C to 130°C, even more preferably in the range of 90°C to 120°C. If the $C_6$-$C_8$-alkane solvent solvent is a mixture of $C_6$-$C_8$-alkanes then the mixture preferably has a boiling range lying entirely in the temperature range of 90°C to 140°C, preferably lying entirely in the temperature range of 100°C to 130°C. More preferred examples of $C_6$-$C_8$-alkanes are selected from the group consisting of methylcyclohexane, 1,2-dimethylcyclohexane, 1,3-dimethylcyclohexane and 1,4-dimethylcyclohexane. Most preferably the $C_6$-$C_8$-alkane solvent is essentially (meaning at least 95% by volume, based on the $C_6$-$C_8$-alkane solvent) methylcyclohexane.

In the composition of the invention the solvent comprises, besides the ketone solvent, an alkylbenzene solvent as a second component which is a mixture of xylenes and ethylbenzene, wherein in particular the weight ratio of xylenes to ethylbenzene is in the range of 3:1 to 2:1.

The solvent preferably consists essentially, that is, to at least 95% by volume, of the ketone solvent as first component and the $C_6$-$C_8$-alkane solvent (or alkylbenzene solvent) as the second component. For these preferred solvent the following further features are more preferred:

a) The boiling point(s) of each of the one or more ketone(s) is(are) 40° C to 70° C higher, preferably 50°C to 60°C higher, than the boiling point(s) of each of the one or more $C_6$-$C_8$-alkanes.
b) the boiling point(s) of each of the one or more ketone(s) is(are) 10°C to 30°C higher, preferably 15°C to 25°C higher, than the upper boundary temperature value of the boiling range of the mixture of alkylbenzenes.
c) The weight ratio of alkylbenzene(s) to ketone(s) is in the range of 10:1 to 3:1.
d) None of the $C_6$-$C_8$-alkane solvents (or alkylbenzene solvents) forms any azeotrope with any of the ketone(s).

Most preferred are firstly compositions in the form of a solution; the composition comprising the anhydride-modified polyolefin and anhydride-modified styrenic block copolymer in a total amount in the range of 7% to 18% by weight in total, based on the composition, and in a weight ratio of anhydride-modified polyolefin to anhydride-modified styrenic block copolymer which is in the range of 2:1 to 6:1; the composition containing the isocyanate-containing crosslinker in a weight ratio in the range of 0.1:1 to 0.4:1 with respect to the sum of anhydride-modified polyolefin plus anhydride-modified styrenic block copolymer; and the solvent is a mixture of alkyl solvent (in particular methylcyclohexane) and ketone solvent (in particular cyclohexanone), wherein the weight ratio of alkyl solvent to ketone solvent is in the range of 15:1 to 30:1.

Most preferred are secondly compositions in the form of a solution; the composition comprising the anhydride-modified polyolefin and anhydride-modified styrenic block copolymer in a total amount in the range of 7% to 11% by weight in total, based on the composition, and in a weight ratio of anhydride-modified polyolefin to anhydride-modified styrenic block copolymer which is in the range of 2:1 to 6:1; the composition containing an isocyanate-containing crosslinker which is a reaction product obtainable by first reacting aniline with formaldehyde in presence of hydrochloric acid catalyst, and then reacting the obtained mixture of homologous aniline-formaldehyde adducts with phosgene to convert the aromatic amine groups to isocyanate groups, and containing said isocyanate-containing crosslinker in a weight ratio of 0.2:1 to 0.5:1

with respect to the sum of anhydride-modified polyolefin plus anhydride-modified styrenic block copolymer, and the composition being dissolved in a mixture of alkylbenzene solvent and ketone solvent, wherein the weight ratio of alkylbenzene solvent (in particular a mixture of xylenes to ethylbenzene in a weight ratio of 3:1 to 2:1) to ketone solvent (in particular cyclohexanone) is in the range of 6:1 to 3:1.

The compositions of the invention have a markedly low viscosity. This allows to apply the composition of the invention in liquid form with customary applicators for liquids, such as doctor blades, kiss-coaters or knife-on-air applicators.

The compositions of the invention furthermore exhibit a thixotropic behaviour. The term "thixotropic" is understood here as a combination of two properties:

a) A high ratio of initial viscosity (before shearing treatment) to final viscosity (after shearing treatment, by increasing from shear rate of $50s^{-1}$ to $300s^{-1}$ and then again back to $50s^{-1}$); and

b) the mathematical difference between the area under the shear rate-dependent shear stress (in Pa) curve at shear rates increasing from $50s^{-1}$ to $300s^{-1}$ and the area under the shear rate-dependent shear stress curve under shear rate, when shear rates are decreased again back to $50s^{-1}$. This area difference is usually designated in the art as a "viscosity hysteresis".

For the purposes of the invention such viscosity hysteresis may be calculated approximately as a sum using the following formula (3):

$$H \approx \sum_{i=1}^{I} \left[ \left( \frac{S_i \times {}_{inc}v(S_i) + S_{(i+1)} \times {}_{inc}v(S_{(i+1)})}{2} - \frac{S_{(i+1)} \times {}_{dec}v(S_{(i+1)}) + S_i \times {}_{dec}v(S_i)}{2} \right) \times \Delta S_i \right] \quad (3)$$

wherein

$S_i$ and $S_{(i+1)}$ are the i-th and (i+1)-th shear rate, respectively, at which a viscosity is experimentally determined;
${}_{inc}v(S_i)$ and ${}_{inc}V(S_{(i+1)})$ are the experimentally determined viscosities (in Pa·s) at 20°C and shear rates $S_i$ and $S_{(i+1)}$, respectively, at shear rate increasing from $S_i$ to $S_{(i+1)}$;
${}_{dec}v(S_{(i+1)})$ and ${}_{dec}v(S_i)$ are the experimentally determined viscosities (in Pa·s) at 20°C and shear rates $S_{(i+1)}$ and $S_i$, respectively, at shear rate decreasing from $S_{(i+1)}$ to $S_i$; and
$\Delta S_i$ is the i-th differential change between $S_i$ and $S_{(i+1)}$, each of these differential changes being chosen such that a straight line between the points ($S_i$, $v(S_i)$) and ($S_{(i+1)}$, $v(S_{(i+1)})$) represents within experimental error the curve v(S) in the range from $S_i$ to $S_{(i+1)}$, provided that each $\Delta S_i$ is at the most $3.0s^{-1}$.

Such thixotropic behaviour is desirable for application of the composition onto the first or second surface. **If** the composition has been allowed to settle for some time, such as in a storage container, it may have a high viscosity or even a gel-like consistency. Stirring the composition under high shear in the container turns the composition into a liquid of lower viscosity. Because the composition of the invention is thixotropic in the foregoing sense it does not immediately re-gel once stirring in the container is stopped, it remains liquid for a certain settling time. After application of the composition to the first and/or second surface and allowing the composition of the invention may be allowed to settle again for such settling time to allow to re-thicken on the first and/or second surface. This allows further handling of the first and/or second piece without risk of loss of the composition by dripping.High viscosity of the composition after application thereof may in particular be desirable if the second part is in the form of a fabric, where the composition may undesirably soak or penetrate into the meshes of the fabric if its viscosity after application is too low.

The composition of the invention is preferably devoid of halogen and of halogen-containing compounds, meaning it has less than 0.1% by weight, preferably less than 0.05% by weight of halogen based on the composition’s dry content, as detectable therein by CHNX elemental analysis.

The compositions of the invention are suitable as primers for adhering in particular the material pairs TPO/polyester, TPO/TPU and TPO/PU.

Exemplary combinations are:

- a first part of a TPO to a second part made of a TPU, a polyester or a PU;
  a first coating of a TPO to a second part made of a TPU, a polyester or a PU; and
- a first part of a TPO to a second coating of a TPU, a polyester or a PU.

Preferred combinations to be adhered together are TPO sheet / polyester sheet, TPO sheet / bare (unimpregnated) polyester woven or non-woven textile, TPO sheet / TPU-impregnated polyester woven or non-woven textile, TPO sheet / TPU sheet, TPO sheet / PU sheet or TPO sheet / PU coating layer. Particularly preferred material pairs are TPO sheet / bare (unimpregnated) polyester and TPO sheet / TPU-impregnated polyester woven or non-woven textile.
The TPO's for the first part or coating may be either purely aliphatic, mixed aliphatic/aromatic or purely aromatic. Preferably the TPO is purely aliphatic.
Most preferably the TPO is purely aliphatic and is selected from:

- ethylene homopolymers, that is, polymers having less than 0.5%, preferably less than 0.1% by mol, of repetitive units other than $-CH_2-CH_2-$, based on the total of $-CH_2-CH_2-$ repetitive units, whereby this content is determined by $^1H$-NMR;
- propylene homopolymers, that is, polymers having less than 0.5%, preferably less than 0.1% by mol, of repetitive units other than $-CH(CH_3)CH_2-$, based on the total of $-CH(CH_3)CH_2-$ repetitive units, whereby this content is determined by $^1H$-NMR;
- ethene/propene copolymers;
- ethene/$\alpha$-olefin copolymers, wherein the $\alpha$-olefin may be selected from the group consisting of propene, 1-butene, 2-butene, 1-pentene, 1-hexene, 1-heptene and 1-octene;
- block copolymers comprising polyethylene and/or polypropylene hard segments and ethene/propene rubber or uncrosslinked ethene/propene/butadiene rubber soft segments; and
- blends of polyethylene and/or polypropylene and ethene/propene rubber and/or uncrosslinked ethene/propene/butadiene rubber.

The first TPO part is more preferably in the form of a sheetlike material with a planar first surface. In this case the critical surface energy on the first surface of the sheetlike TPO material at 25°C is preferably in the range of 28 to 38 milliNewton/meter (mN/m), more preferably of 30 to 38 mN/m.
For the purposes of the invention any such critical surface energy of a planar TPO first surface is determined using the Zisman plot, wherein the known surface tensions $\gamma_L$ of a set of test solvents (x-axis) are plotted against the cosines of the respective observed contact angles of the test solvents with the TPO surface to be tested (y-axis), the contact angles being measured at 25°C with sessile drop (static) method, and the set of obtained (x/y) measurement points is approximated by a linear regression straight line, and the sought critical surface energy of the TPO surface to be tested is obtained as the x-value of an intersection of said linear regression straight line with a horizontal straight line at y =1.0 (cosine of contact angle = 1.0, thus contact angle = 0), and the said set of test solvents being mixtures of formamide (FM) or ethylene glycol (EG) with 2-ethoxyethanol (EE) according to the following Table 1:

Table 1

| volume mixing ratio | liquid surface tension $\gamma_L$ at 25°C (mN/m) |
|---|---|
| 100.0 (FM) : 0.0 (EE) | 58.3 |
| 99.0 (FM): 1.0 (EE) | 56.4 |
| 100.0 (EG) : 0.0 (EE) | 48.3 |
| 74.7 (FM): 25.3 (EE) | 43.0 |
| 80.0 (EG) : 20.0 (EE) | 39.6 |
| 60.0 (EG) : 40.0 (EE) | 36.9 |
| 48.5 (FM): 51.5 (EE) | 36.5 |
| 35.0 (FM): 65.0 (EE) | 34.2 |
| 40.0 (EG) : 60.0 (EE) | 32.9 |
| 19.0 (FM): 81.0 (EE) | 31.3 |
| 20.0 (EG) : 80.0 (EE) | 30.4 |
| 2.5 (FM): 97.5 (EE) | 28.8 |
| 0.0 (EG) : 100.0 (EE) | 28.6 |

provided that only those test solvents of Table 1 are employed in the Zisman plot whose contact angle with the TPO

surface to be tested is greater than zero (no spreading of the test solvent on the TPO surface). The test setup and conditions for measuring the contact angles may e.g. be as described in Dann, J.R., J. Colloid Interf. Sci. 32(2) pp. 302 ff. (1970).

The first TPO part typically has a planar first surface with a critical surface tension in the said preferred range. It is for the process and composition of the invention not necessary to pre-treat the first surface in any way, such as by plasma treatment or by autoxidation in air or in air/ozone, and/or by daylight. Such pre-treatment of the first surface may nevertheless optionally be done in order to further increase the adhesion to the composition and to the second part.

The first TPO coating is typically made by melt coating or extrusion coating on a second part using e.g. an extrusion coating die. Such in situ formed TPO coating automatically has at its interface to the second part a critical surface tension in the said preferred range because the interface is formed in situ by molten, pristine TPO that would not previously have come into contact with athmospheric oxygen or light.

The polyesters for the second part or coating may generally be any synthetic polyester known in the art. For the purposes of the invention the polyesters may be similar as those described below as the polyester soft segments within the description of the TPU. diol with a dicarboxylic acid, or, more conveniently, by reaction of a diol with the dimethyl ester of the dicarboxylic acid (transesterification) and boiling off the low-boiling methanol. Diols for the polyester are aliphatic linear or branched $C_2$-$C_8$ diols which optionally may contain a carbocyclic saturated $C_5$-$C_6$ ring. Examples therefor are ethylene glycol, propylene glycol, diethylene glycol, 1,4-butanediol, neopentyl glycol, 2-methylpropanediol, 3-methylpentane-1,5-diol, 1,6-hexanediol or cyclohexane dimethanol, and mixtures of such diols. The dicarboxylic acids for the polyester diol are aliphatic linear or branched $C_2$-$C_8$ dicarboxylic acids. Examples therefor are oxalic, malonic, succinic, glutaric and adipic acids or their dimethyl esters, sebacic acid, phthalic anhydride, tetrachlorophthalic anhydride or dimethyl terephthalate or mixtures thereof. The polyester may be diol-terminated or optionally end-capped with suitable etherifying, esterifying, carbonate-forming, or urethane-forming endgroups. More preferred polyesters are selected from the group consisting of PBT (polybutyleneterephthalate), PET (polyethyleneterephthalate), PTT (polytrimethyleneterephthalate), PEN (polyethylenenaphthalate), PC (polycarbonate), PEC (polyestercarbonate) and PAR (aromatic polyesters).

The TPU's for the second part or coating are generally obtainable by reacting diisocyanate-containing hard block segments with polyester diol soft block segments in such amounts that the molar ratio of isocyanate groups to isocyanate reactive hydroxy groups "$N_{NCO}$"/'$N_{OH}$" present in the reaction mixture is between 0.9 and 1.1, preferably between 0.95 and 1.05, and most preferably between 0.99 and 1.01. In this quotient, $N_{NCO}$ is the number of isocyanate groups in the mixture, obtainable by amine titration and back-titrating excess amine with standard acid and expressed in mmol isocyanate groups per g of dry (or neat, solvent-free) weight of mixture, and $N_{OH}$ is the hydroxyl value of the compound mixture, expressed in mmol hydroxyl groups per g of dry (or neat, solvent-free) weight of mixture. The diisocyanate-containing hard blocks are obtainable by reacting a diisocyanate with a diol chain extender. The diisocyanate may be a pure compound or a mixture of diisocyanates. In one preferred embodiment the diisocyanate is an aromatic diisocyanate, more preferably one of the isomeric 2,2'-, 2,4' or, preferably, 4,4'-diphenylmethane diisocyanates. Suitable diol chain extenders include aliphatic $C_2$-$C_6$-diols, such as ethylene glycol, 1,3-propanediol, 1,4-butanediol, 1,5-pentanediol, 1,6-hexanediol, 1,2-propanediol, 2-methylpropanediol, 1,3-butanediol, 2,3-butanediol, 1,3-pentanediol, 1,2-hexanediol and 3-methylpentane-1,5-diol, or glycol ethers, such as diethylene glycol, dipropylene glycol and tripropylene glycol, and aminoalcohols such as ethanolamine, N-methyldiethanolamine and the like. The polyester diol soft segments used preferably have a molecular weight of between 500 and 20000. They may be prepared by reaction of a diol with a dicarboxylic acid, or, more conveniently, by reaction of a diol with the dimethyl ester of the dicarboxylic acid (transesterification) and boiling off the low-boiling methanol. Diols for the polyester diol are aliphatic linear or branched $C_2$-$C_8$ diols which optionally may contain a carbocyclic saturated $C_5$-$C_6$ ring. Examples therefor are ethylene glycol, propylene glycol, diethylene glycol, 1,4-butanediol, neopentyl glycol, 2-methylpropanediol, 3-methylpentane-1,5-diol, 1,6-hexanediol or cyclohexane dimethanol, and mixtures of such diols. The dicarboxylic acids for the polyester diol are aliphatic linear or branched $C_2$-$C_8$ dicarboxylic acids. Examples therefor are oxalic, malonic, succinic, glutaric and adipic acids or their dimethyl esters, sebacic acid, phthalic anhydride, tetrachlorophthalic anhydride or dimethyl terephthalate or mixtures thereof.

The PU's for the second coating are at least weakly crosslinked polyurethanes. These PU coatings are obtainable from crosslinkable TPU's which are made from a mixture of di-, tri- and/or polyisocyanates and a polymeric diol and which by themselves may already exhibit some crosslinking. Therein the di, tri- or polyisocyanate is typically one of the above exemplified isocyanate-containing crosslinkers. The polymeric diol therein may in particular be either a dihydroxy-endcapped TPU. This may be obtained from a TPU as exemplified above for the TPU of the second part by capping both ends with hydroxy groups using a suited diol, such as those exemplified above in the production of the TPU itself. The polymeric diol may alternatively be a polyester diol (such as made by polycondensation of 1,2-dihydroxyethane, 1,2- or 1,3-dihydroxypropane, 1,2-, 1,3- or 1,4-dihydroxybutane and/or 1,6-dihydroxyhexane with adipic acid), a polyether diol (such as made by ring-opening polymerisation of oxirane, 1,2-epoxypropane, 1,2-epoxybutane or tetrahydrofurane), a polycaprolactone diol (made by ring-opening polymerisation of $\varepsilon$-caprolactone) or a polycarbonate diol (such as made by polycondensation of a diol, as exemplified above for the polyesterdiol, with dimethyl or diethyl carbonate). The pre-reaction is carried out with a mixing ratio of polyisocyanate to polyol such that a molar excess of isocyanate moieties over hydroxy

moieties is present, which excess will typically be present also in the prepolymer after completion of the prereaction. Optionally a chain extender such as 1,4-butanediol is co-used in the preparation of the crosslinkable TPU. The crosslinkable TPU made from diisocyanate and polymeric diol is preferably employed in the form of a solution in a suited solvent such as an ester solvent, in particular ethyl acetate or butyl acetate, optionally in admixture with acetone. It is mixed before use with a crosslinker which is capable of reacting with functional groups present in the crosslinkable TPU, such as hydroxy, ester, carboxyl, amide or urethane. Examples of such crosslinkers are diisocyanates (such as those exemplified above for alternative ii) of the isocyanate-containing crosslinker), carbodiimides or aziridines. Crosslinking/curing starts after mixing of crosslinkable TPU and crosslinker.

The first part or coating has a first surface of a given first area and the second part or coating has a second surface of a given second area. In case of sheetlike first and/or second parts, the first and/or second area will typically be the geometric area of a top or bottom surface of the sheetlike first and/or second part. In case of geometrically ill defined first and/or second parts, such as textiles, the first and/or second surface will typically have a first and/or second area which is calculated as the quotient of "weight of the first part" divided by "weight per unit area of the first part" (first surface) or calculated as the quotient of "weight of the second part" divided by "weight per unit area of the second part" (second surface).

The composition of the invention is applied in the form of a solution or dispersion in the solvents described above. A composition of the invention in the form of a dispersion is e.g. obtainable by initially preparing a composition of the invention in solution form, in a solvent in which the components are essentially insoluble at room temperature, by heating and optionally by sonication with ultrasound to form a heated solutions, and then allowing the solution to cool down to room temperature, optionally with stirring or sonication, to allow the solid and/or liquid components to precipitate out of the solvent as finely dispersed solid particles and/or droplets. If the anhydride-modified polyolefin, anhydride-modified styrenic block copolymer and isocyanate-containing crosslinker are all solid at room temperature then a composition of the invention in the form of a dispersion may alternatively also be prepared by micronizing anhydride-modified polyolefin, anhydride-modified styrenic block copolymer and isocyanate-containing crosslinker and suspending the microparticles so obtained in the solvent. It is understood that a composition wherein the anhydride-modified polyolefin, anhydride-modified styrenic block copolymer and isocyanate-containing crosslinker are partly dissolved and partly dispersed (as particles and/or as droplets), depending on their solubility in the solvent, is also usable for the purposes of the invention.

In the composition in the form of a solution or dispersion in a solvent the total solids content of the solution or dispersion is preferably in the range of 5 to 25 weight percent, more preferably of 8 to 25 weight percent, based on the composition.

In the process of the invention the composition of the invention are preferably applied to the first surface and/or to the second surface in a dry mass amount of 10 to 40 g per square metre of the total area of first surface and(or second surface. That is, this amount may be applied either completely to the first surface (e.g. if a second coating is applied to a first surface of a first part), or completely to the second surface (e.g. if a first coating is applied to a second surface of a second part); or may be applied in part to the first surface and the remainder to the second surface (e.g. if a first surface of a first part is bonded to a second surface of a second part).

If both the first and second parts are actual parts to be adhered (none of them is a coating) then the composition of the invention may be applied to either the first surface of the first part, or to the second surface of the second part, or to both the first and second surfaces. If the second part is a woven or nonwoven fabric then the composition or combination of the invention is preferably applied to that second part, so that the fabric can absorb a certain amount of composition or combination of the invention at or near its second surface. This allows to retain the composition or combination of the invention during the processing steps of stacking together with the first part and of bonding of first and second parts together using heat and pressure.

If a first part is to be coated with a second coating then the composition or combination of the invention is typically applied to the first surface of the first part. Alternatively if a second part is to be coated with a first coating then the composition or combination of the invention is typically applied to the second surface of the second part.

The application of composition of the invention may be done by any technique customarily used in the art for application of liquid, molten or powdery compositions. Examples therefore are kiss-coating, spray-coating, coating by doctor blade, powder dusting, and electrostatic powder coating.

The drying of the composition, once applied to the first and/or second part, may be done typically at a temperature of 50°C to 130°C, for a time sufficiently long to remove the solvent(s).

If a first and a second actual part (none of these are coatings) are to be adhered together then the heating during the bonding is preferably up to a maximum temperature which is 20°C to 50°C, more preferably 30°C to 40°C, above the melting point of the TPO of the first part, that melting point of the TPO being determined by differential scanning calorimetry (DSC) according to norm ISO 11357-3. The maximum temperature is preferably kept for a time in the range of 1 min to 5 min, provided that the time is sufficient for the layer of the three components to effect adhesion promoting between first and second surfaces.. The heating is preferably done without co-use of steam. It is preferably a heating under ambient

conditions (such as atmospheric air) or optionally under an inert gas such as nitrogen. The heating of first and second surfaces may be done with the first and second parts or coatings being inserted in a hot press or oven. If pressure is applied during heating then such pressure may be in the range of 5 bars to 30 bars, preferably of 15 bars to 25 bars, above atmospheric pressure.

Alternatively, if a first molten coating of TPO is to be applied to a second part (such as of polyester or TPU) then the heating may be done by applying the TPO in molten form onto the second part. Such application is typically done with an extruder (extrusion followed by melt coating). The extrusion temperature is preferably 60°C to 120°C, more preferably 70°C to 110°C, above the melting point of the extruded TPO. The extruded first TPU coating is then melt-coated onto the second part, e.g. using heated calendering rolls, these being typically heated up to 50°C to 80°C.

Still further alternatively, if a first part of TPO is to be adhered to a second coating of a crosslinked PU, then a crosslinkable PU is firstly applied to the first TPO part, optionally in the form of a suited solvent and drying off of the solvent, and then the same procedure as exemplified above for adhering a first and a second actual part can be followed, except that the chosen maximum heating temperature will also be sufficient to crosslink the applied crosslinkable coating.

Optionally the composition of the invention may contain an antistatic or conductive additive. This may be preferred because the material pairs to be adhered together by the composition or combination of the invention are by themselves of very high electrical resistance. The antistatic or conductive additive is conventional and may be any such additive as has been used in the field of automotive paints as mentioned in the introduction. Examples for the additive may be selected from the group consisting of conductive carbon black, soot, conductive (nitrogen doped) titanium dioxide, conductive (aluminium doped) zinc oxide, graphite, conductive (antimony doped) tin oxide, conductive (antimony doped) indium oxide.

The invention is now exemplified by the following examples.

Examples

<u>Example 1: Composition formulations in the form of solutions</u>

The formulations are as in the following Table 2. Therein all amounts are in weight% based on the overall composition, unless stated otherwise. The weight ratio of anhydride-modified polyolefin to anhydride-modified styrenic block copolymer is in all formulations 4:1.

Table 2

| Component | type or tradename | 1 [*LA-3297 - 1-38*] | 2 (cmp. ) [*1912 , for 3303-2*] | 3 [*1912 + P199, for 3303-3*] | 4 [*1912 + P363, for 3303-4*] | 5 [*2019 +* P199, *for 3565-1*] | 6 [*2019 + P199, for 3565-2*] | 7 [*2019 + P363, for 3565-3*] | 8 [*2019 + P363, for 3565-4*] | 9 (cmp. ) [*cross linkab le TPU + P199 for 3672-1*] | 10 (cmp. ) *crossl inkabl* e *TPU + P363 for 3672-2*] | 11 [*3072 + P199, for 3742-3*] | 12 [*3072 + P199, for 3742-4*] | 13 [*3072 + P363, for 3742-5*] | 14 [*3072 + P363, for 3742-6*] |
|---|---|---|---|---|---|---|---|---|---|---|---|---|---|---|---|
| Anhydride-modified polvolefin | Amplify™ TY 1052 H | 12.2 | 9 | 8.6 | 8.6 | 9.5 | 9.1 | 9.5 | 9.1 | - | - | 5.8 | 5.7 | 5.8 | 5.7 |
| Anhydride-modified styrenic block copolymer | Kraton™ FG 1901 | 3 | 2.2 | 2.1 | 2.1 | 2.4 | 2.3 | 2.4 | 2.3 | - | - | 1.5 | 1.4 | 1.5 | 1.4 |
| crosslinka ble TPU | Pearlstic k 45 type 18-20 in acetone/ butylacet ate | | | | | | | | | 95.2 | 95.2 | | | | |
| crosslinker 1 [*P199*] | | 4.8 | - | 4.8 | - | 4.8 | 9.1 | - | - | 4.8 | - | 2.4 | 4.8 | - | - |
| crosslinker 2 [*P363*] | - | - | - | - | 4.8 | - | - | 4.8 | 9.1 | - | 4.8 | - | - | 2.4 | 4.8 |
| solvent 1 (alkane) | methylcyclohexane | 76 | 85.4 | 81.3 | 81.3 | 79.1 | 75.5 | 79.1 | 75.5 | - | - | - | - | - | - |
| solvent 2 (ketone) | cyclohexanone | 4 | 3.4 | 3.2 | 3.2 | 4.2 | 4 | 4.2 | 4 | - | - | 14.6-19.5 | 14.3-19.0 | 14.6-19.5 | 14.3-19.0 |
| solvent 3 (alkylbenz e-ne) | xylenes : ethylbenzene 2:1 (w/w) | - | - | - | - | - | - | - | - | - | - | 70.7-75.6 | 69-73.8 | 70.7-75.6 | 69-73.8 |
| Total | | 100 | 100 | 100 | 100 | 100 | 100 | 100 | 100 | 100 | 100 | 100 | 100 | 100 | 100 |
| solid content excl. optional crosslinker | | 15.2 | 11.2 | 10.7 | 10.7 | 11.9 | 11.4 | 11.9 | 11.4 | 17.8 | 17.8 | 7.3 | 7.1 | 7.3 | 7.1 |
| solid content incl. optional crosslinker | | 18.8 | - | 14.3 | 15.5 | 15.5 | 18.2 | 16.7 | 20.5 | 21.4 | 22.6 | 9.1 | 10.7 | 9.7 | 11.9 |

Comparative Example 2 and Examples 3-7: Adhesion tests with compositions of the invention in the form of solutions for pairs of TPO sheet and PET fabrics

These were tested in a bonding test wherein TPO sheets were bonded to a sheet of PET spunbond fabric or to a sheet of PET woven fabric. The properties of the TPO sheets (TPO1) and of the two types of PET fabrics (PET-spun and PET-multiPET-multi) were as in following Tables 3 and 4, respectively.

Table 3

| Component | TPO1 | TPO2 |
|---|---|---|
| ethylene-1-octene copolymer, Queo 203 (Borealis), melting point 96°C by scanning calorimetry (DSC) according to norm ISO 11357-3 | 93 | 92.9 |
| Blue Color Master Batch | 2 | 2 |
| Abrasion-improving masterbatch (30wt% ultra high MW siloxane polymer in LLDPE or LDPE) | 5 | 5 |
| Fluoropolymer Dynamar FX 5920A (processing aid for melt coating) | | 0.1 |

Table 4

| Property | PET-spun | PETmulti |
|---|---|---|
| weave | plain | plain |
| weight per unit of surface [kg/m$^2$] | 0.310 | 0.260 |
| thickness [mm] | 0.580 | 0.480 |
| warp type | spun fibres | multifilaments |
| warp linear density [dtex] | - | 1100 |
| warp filament density [1/cm] | 19.0 | 14.0 |
| weft type | monofilaments | monofilaments |
| weft diameter [mm] | 0.25 | 0.25 |
| weft filament density [1/cm] | 12.5 | 12.0 |

The composition of the invention, if any, was applied onto the PET fabrics using a lab film coater of type ZUA 2000 Universal Applicator of Zehntner GmbH (Comparative Example 2) or using a doctor blade coater of type LTE-S of Mathis AG (Examples 3-7). Each composition-coated fabric was then dried in the LTE-S lab coater for 3 min at 100°C. Each of the fabrics was stacked together with two foils of TPO1 of 0.45 mm total thickness, to form in all cases a layered composite of the structure |fabric|(composition or combination of the invention)TPO1|TPO1|(composition or combination of the invention)|fabric|. This double stacking was done in order to obtain, after the hot pressing, one single central TPO1 layer of sufficient thickness. Each of these double-stacked composites was inserted between the metal pressing plates of a lab press of type Schwabenthan Polystat 400, using a metallic spacers of 1.2 mm thickness between each metal plate of the press and the adjacent fabric layer. A Teflon fabric was also applied between the composites and each metal plate to protect them from sticking. Each double-stacked composite was subjected in the lab press to a heat treatment, wherein a simultaneous pressing with 20 bar was applied. The remaining process parameters for the application of the compositions, the dry mass amounts of applied composition (thus of the combination of the invention) per square meter of surface after drying, the parameters of the heat treatment and the resulting thicknesses and peel strengths of the final layered composites are indicated in below Table 5.

The peel strength values were measured by using a "Zwick Roell 20 KN Allround table-top" testing machine. The test samples were 20mm in width, at least 250mm in length and the testing speed was 100mm/min. The force required to peel off the fabric from the thermoplastic foil and the travel are recorded on the machine. On the record, the take-off area, the first 10 mm are not used. The area of the minimum value is an average value over the detected area. The test result [N/cm] is the separating force for 1cm of width in accordance to DIN 53530 standard.

Table 5

| | Comp. Ex. 2 | Ex. 3 [*3297-1*] | Ex. 4 [*3297-2a*] | Ex. 5 [*3297-2b*] | Ex. 6 [*3297-3a*] | Ex. 7 [*3297-3b*] |
|---|---|---|---|---|---|---|
| **Fabric** | PET-multi | PET-multi | PET-multi | PET-multi | PET-multi | PET-multi |
| **Coating conditions** | | | | | | |
| Composition no. from Table 2 | - | 1 | 1 | 1 | 1 | 1 |
| Thicknesss of slit (μm) (if coating with film coater) | - | 100 | - | - | - | - |
| Number of applied composition layers (if coating with film coater) | - | 1 | - | - | - | - |
| Number of applied composition layers (if coating with doctor blade) | - | - | 3 | 3 | 1 | 1 |
| Tooth position of doctor blade coater (if coating with doctor blade) | - | - | 4 | 4 | 4 | 4 |
| Depth of entry of doctor blade into fabric (mm) (if coating with doctor blade) | - | - | 5 | 5 | 5 | 5 |
| soaking of fabric by composition observed (yes/no) | - | yes | no | no | no | no |
| weight of applied composition of the invention after drying (g/m$^2$) | 0 | 38 | 30 | 34 | 21 | 13 |
| **Heat treatment** | | | | | | |
| Initial temperature (°C) | 40 | 40 | 40 | 40 | 40 | 40 |
| Heating time until maximum temperature was achieved (min) | | | | | | |
| maximum temperature (°C) | 105 | 105 | 105 | 130 | 105 | 130 |
| Time kept at maximum temperature (min) | 2 | 2 | 2 | 2 | 2 | 2 |
| Cooling time until final temperature was achieved (min) | | | | | | |
| final temperature (°C) | 40 | 40 | 40 | 40 | 40 | 40 |
| **Properties of finished composite** | | | | | | |
| Overall thickness (mm) | 1 | 1.05 | 1.12 | 1.12 | 1.11 | 1.08 |
| Peel strength (N/cm), separation in all cases at interface of first surface and second surface | 7 | 14 | 31 | 37 | 23 | 39 |

The results show that the layered composites of inventive Examples 3-7 all outperform the layered composite of Comparative Example 2 with respect to peel strength. That is, using a composition or combination of the invention as an adhesion promoter on a second part in the form of a woven polyester fabric improves the adhesion thereof to a first part of TPO. The results also show that the coating of a second part in the form of a woven fabric by a doctor blade (Examples 4-7) does not cause soaking of the fabric by the composition, but coating with the same compostion by a film coater (Example 3) does cause soaking of the fabric. Soaking is undesirable because it lowers the amount of composition that its available at the interface of first surface of TPO sheet and second surface of woven polyester fabric. The results furthermore show that applying a low amount of composition of the invention in a single doctor blade run, and heating to a maximum temperature which is about 35°C above the DSC melting temperature of the TPO1 (see Table 3) gives the best peel strength (layered composite from Example 7). Applying more composition in multiple doctor blade runs under otherwise identical conditions slightly lowers the peel strength (layered composite from Example 7 vs. layered composite from Example 5). Heating to a

maximum temperature which is only about 10°C above the DSC melting temperature of the TPO1 markedly lowers the peel strength. This decrease can be compensated only in part by applying markedly more composition, which in turn necessitates increasing the number of doctor blade runs for applying the composition (layered composite from Example 7 vs. layered composites from Examples 6 and 4).

Comparative Examples 8 and 10, 13, 18-19 and 20-23 and Examples 9, 11-12, 14-17 and 24-27: Adhesion tests with compositions of the invention for pairs of melt-coated TPO and PET fabrics

The used TPO was in all cases TPO2 and the fabrics were PET-spun or PET-multi, as described in above Tables 3 and 4, respectively. The composition of the invention, if any, was applied onto the PET fabrics with a knife over air system on a coating machine "Coatema Line Coater and dried in the lab coater for 3 min at 120°C-130°C. The TPO was then applied by melt-coating using an extrusion coating die. Peel strength determination of the finished composites was as described above for Comparative Example 2 and Examples 3-7, whereby the peeling of the top fabric from the remainder of the layered compound was determined as described above for Comparative Example 2 and Examples 3-7. The type of composition (if any), the types of melt-coated TPO and of fabric and the observed peel strengths are described in below Table 6.

Table 6

| | [*330 3-1*] | [*329 7-1-3B*] | [*330 3-2*] | [*330 3-3*] | [*330 3-4*] | [*356 5-12*] | [*356 5-1*] | [*356 5-2*] | [*356 5-3*] | [*356 5-4*] | [*367 2-1*] | [*367 2-2*] | [*367 2-3*] | [*367 2-4*] | [*374 2-1*] | [*374 2-2*] | [*374 2-3*] | [*374 2-4*] | [*374 2-5*] | [*374 2-6*] |
|---|---|---|---|---|---|---|---|---|---|---|---|---|---|---|---|---|---|---|---|---|
| | ex. 8 (cm p) | ex. 9 | ex. 10 (cm p.) | ex. 11 | ex. 12 | ex. 13 (com p.) | ex. 14 | ex. 15 | ex. 16 | ex. 17 | ex. 18 (com p.) | ex. 19 (com p.) | ex. 20 (cm p.) | ex. 21 (cm p.) | ex. 22 (cm p.) | ex. 23 (cm p.) | ex. 24 | ex. 25 | ex. 26 | ex. 27 |
| Formulation no. of Table 2 | - | 1 | 2 (cm p,) | 3 | 4 | - | 5 | 6 | 7 | 8 | - | - | 9 (cm p.) | 10 (cm p.) | - | - | 11 | 12 | 13 | 14 |
| Fabric type | PET - spu n | PET - mult i | PET - mult i | PET - mult i | PET - mult i | PET-spun | PET - mult i | PET - mult i | PET - mult i | PET - mult i | PET-spun | PET-multi | PET - mult i | PET - mult i | PET - spu n | PET - mult i | PET - mult i | PET - mult i | PET - mult i | PET - mult i |
| TPO type of table 3 | 2 | 1 | 2 | 2 | 2 | 2 | 2 | 2 | 2 | 2 | 2 | 2 | 2 | 2 | 2 | 2 | 2 | 2 | 2 | 2 |
| Peel strength [N/cm] | 13 | 39 | 7 | 24 | 29 | 15 | 13 | 9 | 10 | 8 | 17 | 6 | 2 | 0 | 13 | 2 | 13 | 11 | 19 | 11 |
| standard deviation peel strength [N/cm] | 3 | | 1 | 2 | 2 | 2 | 1 | 1 | 1 | 0 | 2 | 1 | 0 | 0 | 2 | 1 | 1 | 1 | 1 | 1 |

The results show the following:

a) When using a composition as disclosed herein as primer for adhering PET to TPO then a certain amount of isocyanate-containing crosslinker in the range of 2 to 6% by weight, based on the overall composition, is necessary in order to enhance peel strenght over what is obtainable by simple mechanical adhesion between PET and TPO using spunbond PET fibres (Examples 11 and 12 vs. Comparative Example 8). If the isocyanate-containing crosslinker is absent in the composition then the obtained peel strength is insufficient (Comparative Example 10).
b) The composition of the invention clearly outperforms as a primer for adhering PET to TPO a reference primer composition comprising a combination of isocyanate-containing crosslinker and crosslinkable polyurethane (Examples 11, 12, 14-17, 24-27 vs. Comparative Examples 20 and 21). The two comparative compositions are devoid of any significant primer efficacy.
c) Compositions disclosed herein having

- contents of anhydride-modified polyolefin and anhydride-modified styrenic block copolymer in the preferred range of 7% to 11% by weight in total, based on the overall composition;
- the weight ratio of anhydride-modified polyolefin to anhydride-modified styrenic block copolymer is in the preferred range of 2:1 to 6:1;
- the amount of isocyanate-containing crosslinker is in the range of 1 to 8% by weight, based on the composition, or the isocyanate-containing crosslinker is present in a weight ratio of 0.3:1 to 0.6:1 with respect to the sum of anhydride-modified polyolefin plus anhydride-modified styrenic block copolymer; and
- the composition is in the form of a solution in a mixture of alkyl solvent and ketone solvent, wherein the volume ratio of alkyl solvent to ketone solvent is in the preferred range of 20:1 to 30:1,

appear as a first most preferred embodiment for bonding PET to TPO (Examples 11 and 12).
d) Compositions disclosed herein having

- contents of anhydride-modified polyolefin and anhydride-modified styrenic block copolymer in the preferred range of 7% to 11% by weight in total, based on the overall composition;
- an isocyanate-containing crosslinker which is a reaction product obtainable by first reacting aniline with formaldehyde in presence of hydrochloric acid catalyst, and then reacting the obtained mixture of homologous aniline-formaldehyde adducts with phosgene to convert the aromatic amine groups to isocyanate groups;
- having said isocyanate-containing crosslinker in an amount in the range of 1 to 8% by weight, based on the composition, or in a preferred weight ratio of 0.2:1 to 0.4:1 with respect to the sum of anhydride-modified polyolefin plus anhydride-modified styrenic block copolymer, and
- the composition is in the form of a solution in a mixture of alkylbenzene solvent and ketone solvent, wherein the volume ratio of alkylbenzene solvent to ketone solvent is in the preferred range of 6:1 to 3:1,

appear as a second most preferred embodiment for bonding PET to TPO (Examples 26).

Theternary combination of anhydride-modified polyolefin, anhydride-modified styrenic block copolymer and isocyanate-containing crosslinker thus appears synergistic with respect to peel strength over either a double combination anhydride-modified polyolefin and anhydride-modified styrenic block copolymer and over a double combination of isocyanate-containing crosslinker and crosslinkable TPU.

Example 27: Bonding a crosslinked PU coating onto a TPO top layer of conveyor belts

A composition of the invention, similar as one of formulation numbers 1, 3-8 or 11-14 of Table 2, was applied onto the TPO layer of commercial conveyor belts (types CNB-8E or CNB-6EB-A1 marketed by the applicant, the latter comprising an abrasion-improving additive, which however impairs the adhesion of the inventive primer) , and dried for 5 min at 100°C. A commercial solvent-based crosslinkable PU is applied on top of the dried layer of the combination of the invention and dried under the same conditions as for the applying and drying of the composition of the invention. The same solvent-based crosslinkable PU was applied under the same conditions to the TPO layer of reference samples of the same types of conveyor belts, except that no composition of the invention is applied beforehand . In the crosslinked PU-coated reference conveyor belts the PU coating could be released by hand from the TPO layer; the crosslinked PU coating did not adhere to the TPO layer. The PU-coated conveyor belts containing the beforehand coating with the combination of the invention however could be subject to a dynamic testing with 1 million cycles (with flexion and counter flexion) on a De Mattia Flexon Check instrument from Gibitre Instruments, during which the crosslinked PU coating did not peel off from the TPO layer nor developed cracks.

## Claims

1. Use of a composition in the form of a solution or dispersion in a solvent, comprising

an anhydride-modified polyolefin,
an anhydride-modified styrenic block copolymer, and
an isocyanate-containing crosslinker,

wherein

the anhydride-modified polyolefin and anhydride-modified styrenic block copolymer are present in a total amount in the range of 7% to 18% by weight in total, based on the composition, and in a weight ratio of anhydride-modified polyolefin to anhydride-modified styrenic block copolymer which is in the range of 2:1 to 6:1;
and
the solvent comprises as a first component a ketone solvent which is one or more aliphatic $C_5$-$C_8$-ketones each adhering to the following formula:

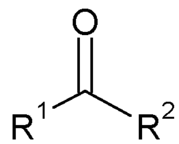

wherein $R^1$ and $R^2$ are each independently selected from the group consisting of methyl, ethyl and branched or unbranched $C_3$-$C_4$ alkyls, provided that the total carbon number of $R^1$ and $R^2$ is in the range of 4 to 7; or wherein $R^1$ and $R^2$ taken together form an alkylene bridge $-(CH_2)_m-$, wherein m is an integer in the range of 4 to 7; and comprises as a second component a $C_6$-$C_8$-alkane solvent;
for promoting adhesion of TPO to polyester;
**characterized in that**
the isocyanate-containing crosslinker has an NCO content of from 10 to 35% by weight, based on the isocyanate-containing crosslinker, as determined according to standard DIN 11909 (2007) at room temperature, and the composition comprises the isocyanate-containing crosslinker in a peel strenght-enhancing amount which is in the range of 2 to 6% by weight, based on the overall composition; and
the weight ratio of the isocyanate-containing crosslinker to the sum of anhydride-modified polyolefin plus anhydride-modified styrenic block copolymer in the composition is in the range of 0.2:1 to 0.5:1.

2. The use of claim 1, wherein the anhydride-modified polyolefin is obtainable either

1) by grafting a polyolefin which is selected from the group consisting of polyethylene, an ethylene-α-olefin-copolymer (wherein the α-olefin is selected from the group consisting of propene, 1-butene, 1-pentene, 1-hexene, 1-heptene and 1-octene) and polypropylene; with an olefinic anhydride selected from the group consisting of

- maleic anhydride,

- a Diels-Alder reaction product of maleic anhydride with buta-1,3-diene, cyclopentadiene or cyclohexa-1,3-diene; and
- a reaction product of maleic anhydride with an α-olefin selected from the group consisting of propene, 1-butene, 1-pentene, 1-hexene, 1-heptene and 1-octene; or

2) by copolymerizing an olefinic anhydride as defined above with ethylene and/or an α-olefin as defined above.

3. The use of claim 1 or 2, wherein the styrenic block copolymer within the anhydride-modified styrenic block copolymer is selected from the group consisting of SBS (styrene-butadiene-styrene), SIS (styrene-isoprene-styrene) and SEBS (styrene-(ethylene-co-butylene)-styrene).

4. The use of anyone of claims 1 to 3, wherein the isocyanate-containing crosslinker is

i) a reaction product obtainable by first reacting aniline with formaldehyde in presence of hydrochloric acid catalyst, and then reacting the obtained mixture of homologous aniline-formaldehyde adducts with phosgene; or
ii) is selected from the group consisting of 2,4-tolylenediisocyanate, 2,6-tolylenediisocyanate, hexamethylenediisocyanate, m-xylenediisocyanate, p-xylenediisocyanate,2 diisophorone diisocyanate and diphenylether-2,4,4-triisocyanate; or
iii) an uretidinedione- and/or 2,4,6-trioxotriazine-containing oligomer of 2,4-tolylenediisocyanate and/or 2,6-tolylenediisocyanate.

**5.** The use of anyone of claims 1 to 4, wherein the first component of the solvent is cyclohexanone and the second component of the solvent is methylcyclohexane.

**6.** The use of claim 5, wherein
the weight ratio of methylcyclohexane to cyclohexanone is in the range of 15:1 to 30:1.

**7.** The use of claim 6, wherein the alkylbenzene solvent is a mixture of xylenes and ethylbenzene in a weight ratio of 3:1 to 2:1.

**8.** The use of anyone of claims 1 to 7, wherein the solvent consists to at least 95% by volume of ketone solvent as first component and $C_6$-$C_8$-alkane solvent as second component.

**9.** The use of of anyone of claims 1 to 8, wherein the TPO is a TPO part in the form of a sheetlike material with a planar first surface having a critical surface energy in the range of 28 to 38 mN/m at 25°C.

**10.** The use of anyone of claims 1 to 7, wherein the anhydride-modified polyolefin is as defined in claim 2; the anhydride-modified styrenic block copolymer is as defined in claim 3; or the isocyanate-containing crosslinker is as defined in claim 4.

**11.** A composition in the form of a solution or dispersion in a solvent, comprising

an anhydride-modified polyolefin,
an anhydride-modified styrenic block copolymer, and
an isocyanate-containing crosslinker,

wherein

the anhydride-modified polyolefin and anhydride-modified styrenic block copolymer are present in a total amount in the range of 7% to 18% by weight in total, based on the composition, and in a weight ratio of anhydride-modified polyolefin to anhydride-modified styrenic block copolymer which is in the range of 2:1 to 6:1;
the weight ratio of isocyanate-containing crosslinker to the sum of anhydride-modified polyolefin plus anhydride-modified styrenic block copolymer is in the range of 0.2:1 to 0.5:1; and
the solvent comprises as a first component a ketone solvent which is one or more aliphatic $C_5$-$C_8$-ketones each adhering to the following formula:

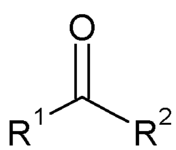

wherein $R^1$ and $R^2$ are each independently selected from the group consisting of methyl, ethyl and branched or unbranched $C_3$-$C_4$ alkyls, provided that the total carbon number of $R^1$ and $R^2$ is in the range of 4 to 7; or wherein $R^1$ and $R^2$ taken together form an alkylene bridge $-(CH_2)_m-$, wherein m is an integer in the range of 4 to 7; and comprises as a second component an alkylbenzene solvent which is a mixture of xylenes and ethylbenzene.

**12.** The composition of claim 11, wherein the anhydride-modified polyolefin is obtainable either

1) by grafting a polyolefin which is selected from the group consisting of polyethylene, an ethylene-α-olefin-copolymer (wherein the α-olefin is selected from the group consisting of propene, 1-butene, 1-pentene, 1-hexene, 1-heptene and 1-octene) and polypropylene; with an olefinic anhydride selected from the group consisting of

- maleic anhydride,
- a Diels-Alder reaction product of maleic anhydride with buta-1,3-diene, cyclopentadiene or cyclohexa-1,3-diene; and
- a reaction product of maleic anhydride with an $\alpha$-olefin selected from the group consisting of propene, 1-butene, 1-pentene, 1-hexene, 1-heptene and 1-octene; or

2) by copolymerizing an olefinic anhydride as defined above with ethylene and/or an $\alpha$-olefin as defined above.

**13.** The composition of claim 11 or 12, wherein the styrenic block copolymer within the anhydride-modified styrenic block copolymer is selected from the group consisting of SBS (styrene-butadiene-styrene), SIS (styrene-isoprene-styrene) and SEBS (styrene-(ethylene-co-butylene)-styrene).

**14.** The composition of anyone of claims 11 to 13, wherein the isocyanate-containing crosslinker is

i) a reaction product obtainable by first reacting aniline with formaldehyde in presence of hydrochloric acid catalyst, and then reacting the obtained mixture of homologous aniline-formaldehyde adducts with phosgene; or
ii) is selected from the group consisting of 2,4-tolylenediisocyanate, 2,6-tolylenediisocyanate, hexamethylenediisocyanate, m-xylenediisocyanate, p-xylenediisocyanate, diisophorone diisocyanate and diphenylether-2,4,4-triisocyanate; or
iii) an uretidinedione- and/or 2,4,6-trioxotriazine-containing oligomer of 2,4-tolylenediisocyanate and/or 2,6-tolylenediisocyanate.

**15.** The composition of anyone of claims 11 to 14, wherein the first component of the solvent is cyclohexanone.

**Patentansprüche**

**1.** Verwendung einer Zusammensetzung in Form einer Lösung oder Dispersion in einem Lösungsmittel, umfassend

ein anhydridmodifiziertes Polyolefin,
ein anhydridmodifiziertes Styrol-Blockcopolymer und
einen isocyanathaltigen Vernetzer,

wobei

das anhydridmodifizierte Polyolefin und das anhydridmodifizierte Styrol-Blockcopolymer in einer Gesamtmenge im Bereich von 7 bis 18 Gew.-%, bezogen auf die Zusammensetzung, und in einem Gewichtsverhältnis von anhydridmodifiziertem Polyolefin zu anhydridmodifiziertem Styrol-Blockcopolymer im Bereich von 2:1 bis 6:1 vorliegen;
und
das Lösungsmittel als erste Komponente ein Ketonlösungsmittel umfasst, das eines oder mehrere aliphatische $C_5$ -$C_8$ -Ketone ist, die je der folgenden Formel entsprechen:

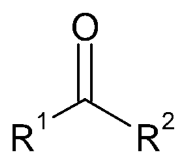

wobei $R^1$ und $R^2$ je unabhängig voneinander aus der Gruppe ausgewählt sind, die aus Methyl, Ethyl und verzweigten oder unverzweigten $C_3$-$C_4$-Alkylgruppen besteht, mit der Maßgabe, dass die Gesamtkohlenstoffzahl von $R^1$ und $R^2$ im Bereich von 4 bis 7 liegt; oder wobei $R^1$ und $R^2$ zusammen eine Alkylenbrücke - $(CH_2)_m$ - bilden, wobei m eine ganze Zahl im Bereich von 4 bis 7 ist; und als zweite Komponente ein $C_6$ -$C_8$ -Alkan-Lösungsmittel umfasst;
zur Förderung der Haftung von TPO an Polyester;

**dadurch gekennzeichnet, dass**
der isocyanathaltige Vernetzer einen NCO-Gehalt von 10 bis 35 Gew.-%, bezogen auf den isocyanathaltigen Vernetzer, gemäß DIN 11909 (2007) bei Raumtemperatur bestimmt, und die Zusammensetzung den isocyanathaltigen Vernetzer in einer die Schälfestigkeit verbessernden Menge im Bereich von 2 bis 6 Gew.-%, bezogen auf die Gesamtzusammensetzung, enthält; und
das Gewichtsverhältnis des isocyanathaltigen Vernetzers zur Summe aus anhydridmodifiziertem Polyolefin und anhydridmodifiziertem Styrol-Blockcopolymer in der Zusammensetzung im Bereich von 0,2:1 bis 0,5:1 liegt.

**2.** Verwendung nach Anspruch 1, wobei das anhydridmodifizierte Polyolefin erhältlich ist entweder

1) durch Pfropfen eines Polyolefins, das aus der Gruppe ausgewählt ist, die aus Polyethylen, einem Ethylen-α-Olefin-Copolymer (wobei das α -Olefin aus der Gruppe ausgewählt ist, die aus Propen, 1-Buten, 1-Penten, 1-Hexen, 1-Hepten und 1-Octen besteht) und Polypropylen; mit einem olefinischen Anhydrid, das aus der Gruppe ausgewählt ist, bestehend aus

- Maleinsäureanhydrid,

  - einem Diels-Alder-Reaktionsprodukt von Maleinsäureanhydrid mit Buta-1,3-dien, Cyclopentadien oder Cyclohexa-1,3-dien; und
  - einem Reaktionsprodukt von Maleinsäureanhydrid mit einem α-Olefin, ausgewählt aus der Gruppe bestehend aus Propen, 1-Buten, 1-Penten, 1-Hexen, 1-Hepten und 1-Octen;

oder

2) durch Copolymerisieren eines wie oben definierten olefinischen Anhydrids mit Ethylen und/oder einem wie oben definierten α-Olefin.

**3.** Verwendung nach Anspruch 1 oder 2, wobei das Styrolblockcopolymer innerhalb des anhydridmodifizierten Styrolblockcopolymers aus der Gruppe ausgewählt ist, die aus SBS (Styrol-Butadien-Styrol), SIS (Styrol-Isopren-Styrol) und SEBS (Styrol-(Ethylen-Co-Butylen)-Styrol) besteht.

**4.** Verwendung nach irgendeinem der Ansprüche 1 bis 3, wobei der isocyanathaltige Vernetzer

i) ein Reaktionsprodukt ist, das erhältlich ist, indem zunächst Anilin mit Formaldehyd in Gegenwart eines Salzsäurekatalysators umgesetzt wird und anschließend die erhaltene Mischung aus homologen Anilin-Formaldehyd-Addukten mit Phosgen umgesetzt wird; oder
ii) ausgewählt ist aus der Gruppe bestehend aus 2,4-Tolylendiisocyanat, 2,6-Tolylendiisocyanat, Hexamethylendiisocyanat, m-Xylendiisocyanat, p-Xylendiisocyanat, 2-Diisophorondiisocyanat und Diphenylether-2,4,4-triisocyanat; oder
iii) ein uretidindion- und/oder 2,4,6-trioxotriazinhaltiges Oligomer von 2,4-Tolylendiisocyanat und/oder von 2,6-Tolylendiisocyanat.

**5.** Verwendung nach irgendeinem der Ansprüche 1 bis 4, wobei die erste Komponente des Lösungsmittels Cyclohexanon und die zweite Komponente des Lösungsmittels Methylcyclohexan ist.

**6.** Verwendung nach Anspruch 5, wobei
das Gewichtsverhältnis von Methylcyclohexan zu Cyclohexanon im Bereich von 15:1 bis 30:1 liegt.

**7.** Verwendung nach Anspruch 6, wobei das Alkylbenzol-Lösungsmittel eine Mischung aus Xylolen und Ethylbenzol in einem Gewichtsverhältnis von 3:1 bis 2:1 ist.

**8.** Verwendung nach irgendeinem der Ansprüche 1 bis 7, wobei das Lösungsmittel zu mindestens 95 Vol.-% aus einem Ketonlösungsmittel als erster Komponente und einem $C_6$-$C_8$-Alkanlösungsmittel als zweiter Komponente besteht.

**9.** Verwendung nach irgendeinem der Ansprüche 1 bis 8, wobei das TPO ein TPO-Teil in Form eines blattartigen Materials mit einer ebenen ersten Oberfläche ist, die eine kritische Oberflächenenergie im Bereich von 28 bis 38 mN/m bei 25 °C aufweist.

**10.** Verwendung nach irgendeinem der Ansprüche 1 bis 7, wobei das anhydridmodifizierte Polyolefin wie in Anspruch 2 definiert ist, das anhydridmodifizierte Styrol-Blockcopolymer wie in Anspruch 3 definiert ist oder der isocyanathaltige Vernetzer wie in Anspruch 4 definiert ist.

**11.** Zusammensetzung in Form einer Lösung oder Dispersion in einem Lösungsmittel, umfassend

ein anhydridmodifiziertes Polyolefin,
ein anhydridmodifiziertes Styrol-Blockcopolymer und
einen isocyanathaltigen Vernetzer,

wobei

das anhydridmodifizierte Polyolefin und das anhydridmodifizierte Styrol-Blockcopolymer in einer Gesamtmenge im Bereich von 7 bis 18 Gew.-%, bezogen auf die Zusammensetzung, und in einem Gewichtsverhältnis von anhydridmodifiziertem Polyolefin zu anhydridmodifiziertem Styrol-Blockcopolymer im Bereich von 2:1 bis 6:1 vorliegen;
das Gewichtsverhältnis von isocyanathaltigem Vernetzer zur Summe aus anhydridmodifiziertem Polyolefin und anhydridmodifiziertem Styrol-Blockcopolymer im Bereich von 0,2:1 bis 0,5:1 liegt; und
das Lösungsmittel als erste Komponente ein Ketonlösungsmittel umfasst, das eines oder mehrere aliphatische $C_5$-$C_8$-Ketone ist, die je der folgenden Formel entsprechen:

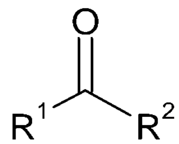

wobei $R^1$ und $R^2$ je unabhängig voneinander aus der Gruppe ausgewählt sind, die aus Methyl, Ethyl und verzweigten oder unverzweigten $C_3$-$C_4$-Alkylgruppen besteht, mit der Maßgabe, dass die Gesamtkohlenstoffzahl von $R^1$und $R^2$ im Bereich von 4 bis 7 liegt; oder wobei $R^1$und $R^2$zusammen eine Alkylenbrücke - $(CH_2)_m$ - bilden, wobei m eine ganze Zahl im Bereich von 4 bis 7 ist; und als zweite Komponente ein Alkylbenzol-Lösungsmittel umfasst, das eine Mischung aus Xylolen und Ethylbenzol ist.

**12.** Die Zusammensetzung nach Anspruch 11, wobei das anhydridmodifizierte Polyolefin erhältlich ist entweder

1) durch Pfropfen eines Polyolefins, das aus der Gruppe ausgewählt ist, die aus Polyethylen, einem Ethylen-α-Olefin-Copolymer (wobei dasα -Olefin aus der Gruppe ausgewählt ist, die aus Propen, 1-Buten, 1-Penten, 1-Hexen, 1-Hepten und 1-Octen ausgewählt ist) und Polypropylen; mit einem olefinischen Anhydrid, das aus der Gruppe ausgewählt ist, bestehend aus

- Maleinsäureanhydrid,
- einem Diels-Alder-Reaktionsprodukt aus Maleinsäureanhydrid mit Buta-1,3-dien, Cyclopentadien oder Cyclohexa-1,3-dien; und
- einem Reaktionsprodukt von Maleinsäureanhydrid mit einem α-Olefin, ausgewählt aus der Gruppe bestehend aus Propen, 1-Buten, 1-Penten, 1-Hexen, 1-Hepten und 1-Octen;

oder
2) durch Copolymerisieren eines wie oben definierten olefinischen Anhydrids mit Ethylen und/oder einem wie oben definierten α -Olefin.

**13.** Zusammensetzung nach Anspruch 11 oder 12, wobei das Styrolblockcopolymer innerhalb des anhydridmodifizierten Styrolblockcopolymers ausgewählt ist aus der Gruppe bestehend aus SBS (Styrol-Butadien-Styrol), SIS (Styrol-Isopren-Styrol) und SEBS (Styrol-(Ethylen-co-Butylen)-Styrol).

**14.** Die Zusammensetzung nach irgendeinem der Ansprüche 11 bis 13, wobei der isocyanathaltige Vernetzer

i) ein Reaktionsprodukt ist, das erhältlich ist, indem zunächst Anilin mit Formaldehyd in Gegenwart eines Salzsäurekatalysators umgesetzt wird und anschließend die erhaltene Mischung aus homologen Anilin-Formaldehyd-Addukten mit Phosgen umgesetzt wird; oder
ii) ausgewählt ist aus der Gruppe bestehend aus 2,4-Tolylendiisocyanat, 2,6-Tolylendiisocyanat, Hexamethylendiisocyanat, m-Xylendiisocyanat, p-Xylendiisocyanat, Diisophorondiisocyanat und Diphenylether-2,4,4-triisocyanat; oder
iii) ein Uretidindion- und/oder 2,4,6-Trioxotriazin-haltiges Oligomer von 2,4-Tolylendiisocyanat und/oder von 2,6-Tolylendiisocyanat.

**15.** Zusammensetzung nach irgendeinem der Ansprüche 11 bis 14, wobei die erste Komponente des Lösungsmittels Cyclohexanon ist.

## Revendications

**1.** Utilisation d'une composition sous la forme d'une solution ou dispersion dans un solvant, comprenant

une polyoléfine modifiée par un anhydride,
un copolymère styrénique à blocs modifié par un anhydride, et
un agent de réticulation contenant de l'isocyanate,
dans laquelle
la polyoléfine modifiée par un anhydride et le copolymère styrénique à blocs modifié par un anhydride sont présents en une quantité totale dans la plage de 7 % à 18 % en poids au total, par rapport à la composition, et en un rapport en poids de polyoléfine modifiée par un anhydride à copolymère styrénique à blocs modifié par un anhydride qui se situe dans la plage de 2:1 à 6:1 ;
et
le solvant comprend en tant que premier composant un solvant de type cétone qui est une ou plusieurs cétones aliphatiques en $C_5$-$C_8$ correspondant chacune à la formule suivante :

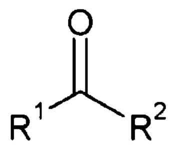

dans laquelle $R^1$ et $R^2$ sont choisis chacun indépendamment dans l'ensemble constitué par les groupes méthyle, éthyle et alkyle en $C_3$-$C_4$ ramifiés ou non ramifiés, sous réserve que le nombre total d'atomes de carbone de $R^1$ et $R^2$ se situe dans la plage de 4 à 7 ; ou dans laquelle $R^1$ et $R^2$ considérés ensemble forment un pont alkylène $-(CH_2)_m-$, dans lequel m est un nombre entier dans la plage de 4 à 7 ; et comprend en tant que second composant un solvant de type alcane en $C_6$-$C_8$ ;
pour promouvoir l'adhérence de la TPO au polyester ;
**caractérisée en ce que**
l'agent de réticulation contenant de l'isocyanate a une teneur en NCO de 10 à 35 % en poids, par rapport à l'agent de réticulation contenant un isocyanate, comme déterminé conformément à la norme DIN 11909 (2007) à la température ambiante, et la composition comprend l'agent de réticulation contenant de l'isocyanate en une quantité augmentant la résistance au pelage, qui se situe dans la plage de 2 à 6 % en poids, par rapport à la composition totale ; et
le rapport en poids de l'agent de réticulation contenant un isocyanate à la somme de polyoléfine modifiée par un anhydride plus copolymère styrénique à blocs modifié par un anhydride dans la composition se situe dans la plage de 0,2:1 à 0,5:1.

**2.** Utilisation selon la revendication 1, dans laquelle la polyoléfine modifiée par un anhydride peut être obtenue soit

1) par greffage d'une polyoléfine qui est choisie dans l'ensemble constitué par le polyéthylène, un copolymère éthylène/$\alpha$-oléfine (où l'$\alpha$-oléfine est choisie dans l'ensemble constitué par le propène, le 1-butène, le 1-pentène, le 1-hexène, le 1-heptène et le 1-octène) et le polypropylène ; avec un anhydride oléfinique choisi dans l'ensemble constitué par

- l'anhydride maléique,
- un produit de réaction de Diels-Alder d'anhydride maléique avec le buta-1,3-diène, le cyclopentadiène ou le

cyclohexa-1,3-diène ; et
- un produit de réaction d'anhydride maléique avec une $\alpha$-oléfine choisie dans l'ensemble constitué par le propène, le 1-butène, le 1-pentène, le 1-hexène, le 1-heptène et le 1-octène ;

soit
2) par copolymérisation d'un anhydride oléfinique tel que défini plus haut avec l'éthylène et/ou une $\alpha$-oléfine telle que définie plus haut.

**3.** Utilisation selon la revendication 1 ou 2, dans laquelle le copolymère styrénique à blocs au sein du copolymère styrénique à blocs modifié par un anhydride est choisi dans l'ensemble constitué par le SBS (styrène-butadiène-styrène), le SIS (styrène-isoprène-styrène) et le SEBS (styrène-(éthylène-co-butylène)-styrène).

**4.** Utilisation selon l'une quelconque des revendications 1 à 3, dans laquelle l'agent de réticulation contenant de l'isocyanate est

i) un produit de réaction pouvant être obtenu en faisant d'abord réagir de l'aniline avec du formaldéhyde en présence d'un catalyseur acide chlorhydrique, et en faisant ensuite réagir le mélange obtenu d'adduits aniline-formaldéhyde homologues avec du phosgène; ou
ii) est choisi dans l'ensemble constitué par le 2,4-diisocyanate de tolylène, le 2,6-diisocyanate de tolylène, le diisocyanate d'hexaméthylène, le diisocyanate de m-xylène, le diisocyanate de p-xylène, le diisocyanate de diisophorone et le 2,4,4-triisocyanate d'éther diphénylique ; ou
iii) un oligomère de 2,4-diisocyanate de tolylène et/ou 2,6-diisocyanate de tolylène, contenant de l'urétidinedione et/ou de la 2,4,6-trioxotriazine.

**5.** Utilisation selon l'une quelconque des revendications 1 à 4, dans laquelle le premier composant du solvant est la cyclohexanone et le second composant du solvant est le méthylcyclohexane.

**6.** Utilisation selon la revendication 5, dans laquelle
le rapport en poids de méthylcyclohexane à cyclohexanone se situe dans la plage de 15:1 à 30:1.

**7.** Utilisation selon la revendication 6, dans laquelle le solvant alkylbenzène est un mélange de xylènes et d'éthylbenzène en un rapport en poids de 3:1 à 2:1.

**8.** Utilisation selon l'une quelconque des revendications 1 à 7, dans laquelle le solvant consiste en au moins 95 % en volume de solvant de type cétone en tant que premier composant et solvant de type alcane en $C_6$-$C_8$ en tant que second composant.

**9.** Utilisation selon l'une quelconque des revendications 1 à 8, dans laquelle la TPO est une pièce en TPO sous la forme d'un matériau de type feuille présentant une première surface plane ayant une énergie superficielle critique dans la plage de 28 à 38 mN/m à 25 °C.

**10.** Utilisation selon l'une quelconque des revendications 1 à 7, dans laquelle la polyoléfine modifiée par un anhydride est telle que définie dans la revendication 2 ; le copolymère styrénique à blocs modifié par un anhydride est tel que défini dans la revendication 3 ; ou l'agent de réticulation contenant de l'isocyanate est tel que défini dans la revendication 4.

**11.** Composition sous la forme d'une solution ou dispersion dans un solvant, comprenant

une polyoléfine modifiée par un anhydride,
un copolymère styrénique à blocs modifié par un anhydride, et
un agent de réticulation contenant de l'isocyanate,
dans laquelle
la polyoléfine modifiée par un anhydride et le copolymère styrénique à blocs modifié par un anhydride sont présents en une quantité totale dans la plage de 7 % à 18 % en poids au total, par rapport à la composition, et en un rapport en poids de polyoléfine modifiée par un anhydride à copolymère styrénique à blocs modifié par un anhydride qui se situe dans la plage de 2:1 à 6:1 ;
le rapport en poids de l'agent de réticulation contenant de l'isocyanate à la somme de polyoléfine modifiée par un anhydride plus copolymère styrénique à blocs modifié par un anhydride se situe dans la plage de 0,2:1 à 0,5:1 ; et
le solvant comprend en tant que premier composant un solvant de type cétone qui consiste en une ou plusieurs

cétones aliphatiques en $C_5$-$C_8$ correspondant chacune à la formule suivante :

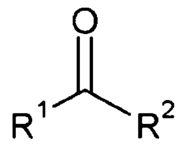

dans laquelle $R^1$ et $R^2$ sont choisis chacun indépendamment dans l'ensemble constitué par les groupes méthyle, éthyle et alkyle en $C_3$-$C_4$ ramifiés ou non ramifiés, étant entendu que le nombre total d'atomes de carbone de $R^1$ et $R^2$ se situe dans la plage de 4 à 7; ou dans laquelle $R^1$et $R^2$ considérés ensemble forment un pont alkylène $-(CH_2)_m-$, dans lequel m est un nombre entier dans la plage de 4 à 7 ; et comprend en tant que second composant un solvant alkylbenzène qui est un mélange de xylènes et d'éthylbenzène.

**12.** Composition selon la revendication 11, dans laquelle la polyoléfine modifiée par un anhydride peut être obtenue soit

1) par greffage d'une polyoléfine qui est choisie dans l'ensemble constitué par le polyéthylène, un copolymère éthylène/α-oléfine (où l'α-oléfine est choisie dans l'ensemble constitué par le propène, le 1-butène, le 1-pentène, le 1-hexène, le 1-heptène et le 1-octène) et le polypropylène ; avec un anhydride oléfinique choisi dans l'ensemble constitué par

- l'anhydride maléique,
- un produit de réaction de Diels-Alder d'anhydride maléique avec le buta-1,3-diène, le cyclopentadiène ou le cyclohexa-1,3-diène ; et
- un produit de réaction d'anhydride maléique avec une α-oléfine choisie dans l'ensemble constitué par le propène, le 1-butène, le 1-pentène, le 1-hexène, le 1-heptène et le 1-octène ;

soit
2) par copolymérisation d'un anhydride oléfinique tel que défini plus haut avec l'éthylène et/ou une α-oléfine telle que définie plus haut.

**13.** Composition selon la revendication 11 ou 12, dans laquelle le copolymère styrénique à blocs au sein du copolymère styrénique à blocs modifié par un anhydride est choisi dans l'ensemble constitué par le SBS (styrène-butadiène-styrène), le SIS (styrène-isoprène-styrène) et le SEBS (styrène-(éthylène-co-butylène)-styrène).

**14.** Composition selon l'une quelconque des revendications 11 à 13, dans laquelle l'agent de réticulation contenant un isocyanate est

i) un produit de réaction pouvant être obtenu en faisant d'abord réagir de l'aniline avec du formaldéhyde en présence d'un catalyseur acide chlorhydrique, et en faisant ensuite réagir le mélange obtenu d'adduits aniline-formaldéhyde homologues avec du phosgène; ou
ii) est choisi dans l'ensemble constitué par le 2,4-diisocyanate de tolylène, le 2,6-diisocyanate de tolylène, le diisocyanate d'hexaméthylène, le diisocyanate de m-xylène, le diisocyanate de p-xylène, le diisocyanate de diisophorone et le 2,4,4-triisocyanate d'éther diphénylique ; ou
iii) un oligomère de 2,4-diisocyanate de tolylène et/ou 2,6-diisocyanate de tolylène, contenant de l'urétidinedione et/ou de la 2,4,6-trioxotriazine.

**15.** Composition selon l'une quelconque des revendications 11 à 14, dans laquelle le premier composant du solvant est la cyclohexanone.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4156065 A
- WO 2017003600 A1
- WO 9415981 A1


### Non-patent literature cited in the description


- **MIRABELLA et al.** *Polymer Engineering and Science*, 2004, vol. 40 (9), 2000-2006
- **GHAEMY, M.** ; **ROOHINA, S**. *Iranian Polymer Journal*, 2003, vol. 12 (1), 21
- **SIGGIA, S.** ; **GORDON HANNA, J**. *Anal. Chem.*, 1951, vol. 23 (11), 1717
- **DANN, J.R.** *J. Colloid Interf. Sci.*, 1970, vol. 32 (2), 302